# EUROPÄISCHE PATENTSCHRIFT

(11) **EP 3 829 939 B1**
(45) Veröffentlichungstag und Bekanntmachung des Hinweises auf die Patenterteilung: **13.09.2023**
(21) Anmeldenummer: 19731188.9
(22) Anmeldetag: 08.06.2019
(51) Int. Cl.: B60S 1/04, B60S 1/38, B60S 1/40

(54) **ADAPTEREINHEIT UND WISCHSYSTEM**
ADAPTER UNIT AND WIPER SYSTEM
UNITÉ D'ADAPTATION ET SYSTÈME D'ESSUIE-GLACE

(30) Priorität: 30.07.2018 DE 102018212651
(43) Veröffentlichungstag der Anmeldung: 09.06.2021
(73) Patentinhaber: Robert Bosch GmbH, 70442 Stuttgart (DE)
(72) Erfinder: DEPONDT, Helmut, 3370 Boutersem (BE); TRUYENS, Stijn, 3300 Tienen (BE); KRAEMER, Godelieve, 76549 Huegelsheim (DE); KRUSE, Michael, 76547 Sinzheim (DE); BUBBA, Marcello, 3210 Linden (BE); BRATEC, Herve, 3012 WILSELE (BE)
(86) Internationale Anmeldenummer: PCT/EP2019/065051
(87) Internationale Veröffentlichungsnummer: WO 2020/025203

(56) Entgegenhaltungen:
- EP-A1- 3 045 357
- DE-A1- 10 038 993
- DE-A1-102013 220 255

## Beschreibung

Die Erfindung betrifft eine Adaptereinheit, die zu einer Kopplung, insbesondere lösbaren Kopplung eines Wischblatts mit einem Wischarm vorgesehen ist, aufweisend ein Grundelement, ein Abdeckelement und eine Wischarmaufnahme, welche dazu eingerichtet ist, den Wischarm um eine Lagerachse schwenkbar aufzunehmen. Die Erfindung betrifft auch ein Wischsystem mit einer Adaptereinheit gemäß der vorliegenden Erfindung.

### Stand der Technik

Es sind bereits Wischvorrichtungen umfassend einen Wischarm und ein Wischblatt sowie eine Adaptereinheit zur lösbaren Kopplung eines Wischarms mit einem Wischblatt vorgeschlagen worden. Solche Wischvorrichtungen haben den Nachteil, dass der Wischarm stets eine hohe Anpresskraft zum Andrücken des Wischblatts an eine Fahrzeugscheibe aufbringen muss, um eine ausreichende Wischleistung zu gewährleisten. DE 10 2013 220255 A1 offenbart den Oberbegriff von Anspruch 1.

### Offenbarung der Erfindung

### Vorteile

Die vorliegende Erfindung beschreibt eine Adaptereinheit, die zu einer Kopplung, insbesondere lösbaren Kopplung eines Wischblatts mit einem Wischarm vorgesehen ist, aufweisend ein Grundelement, ein Abdeckelement und eine Wischarmaufnahme, welche dazu eingerichtet ist, den Wischarm um eine Lagerachse schwenkbar aufzunehmen, wobei das Abdeckelement mit dem Grundelement verbindbar ausgebildet ist und die Wischarmaufnahme weitgehend abdeckt, und wobei das Abdeckelement eine Windabweiserfläche aufweist, welche dazu vorgesehen ist, eine anströmende Luft abzuweisen und das Wischblatt an eine Fahrzeugscheibe zu drücken, und wobei das Grundelement dazu eingerichtet ist ein Wischblatt aufzunehmen, dadurch gekennzeichnet, dass die Windabweiserfläche einen Hauptwinkel zwischen 25° und 75°, bevorzugt zwischen 40° und 60° mit der Lagerachse einschließt.

Das hat den Vorteil, dass die Windabweiserfläche bei schneller Fahrt aufgrund des sie anströmenden Fahrtwinds das Wischblatt an die Fahrzeugscheibe presst. Das erhöht eine Gesamtanpresskraft des Wischblatts an die Fahrzeugscheibe und verbessert die Wischleistung. Die benötigte Anpresskraft, mit welcher der Wischarm das Wischblatt an die Fahrzeugscheibe presst, wird auf diese Weise reduziert. Es kann ein günstigerer und/oder einfacherer und/oder zuverlässigerer und/oder kompakterer Wischarm mit einer geringeren Anpresskraft verwendet werden, insbesondere mit einer kleineren Feder zum Aufbringen der Anpresskraft. Weiterhin wird durch die Verwendung einer Windabweiserfläche gemäß der vorliegenden Erfindung verhindert, dass die Adaptereinheit bzw. eine Wischvorrichtung - umfassend die Adaptereinheit, das Wischblatt und den Wischarm - durch eine ungünstige Aerodynamik bei schneller Fahrt eine Kraft generiert, welche der benötigten Anpresskraft entgegengesetzt ist und so die Wischleistung verschlechtern würde oder sogar ein Wischen unmöglich machen würde. Durch die Adaptereinheit gemäß der vorliegenden Erfindung wird sichergestellt, dass aufgrund von aerodynamischen Effekten, insbesondere einem Wind, insbesondere Fahrtwind, eine resultierende Kraft das Wischblatt auf die Fahrzeugscheibe drückt.

Vorteilhaft ist das Abdeckelement mit der Windabweiserfläche einstückig ausgebildet. Unter einstückig soll in diesem Zusammenhang insbesondere stoffschlüssig verbunden, wie beispielsweise durch einen Schweißprozess und/oder einen Klebeprozess usw. und besonders vorteilhaft angeformt verstanden werden, wie durch die Herstellung aus einem Guss und/oder durch die Herstellung in einem Ein- oder Mehrkomponentenspritzverfahren. Vorteilhaft weist das Abdeckelement ein Kopplungselement auf welches zur Verbindung mit dem Grundelement vorgesehen ist. Vorteilhaft ist das Abdeckelement mit dem Kopplungselement einstückig ausgebildet.

Unter einem Grundelement soll insbesondere ein Adapter verstanden werden, das einen Kontaktbereich zum Wischblatt bzw. zu einem Wischblattbauteil aufweist und mit dem Wischblatt bzw. dem Wischblattbauteil verbindbar ist, vorteilhaft fest verbindbar ist, insbesondere so verbindbar, dass das Wischblatt in mit dem Grundelement verbundenen Zustand weitgehend nicht gegenüber dem Grundelement beweglich ist. Vorteilhaft weist das Grundelement ein Aufnahmeelement auf, welches dazu vorgesehen ist, mit dem Abdeckelement bzw. mit dem Kopplungselement des Abdeckelements zu koppeln. Vorteilhaft ist die Wischblattadaptereinheit mit dem Kontaktbereich und/oder mit dem Verbindungselement einstückig ausgebildet. Es ist auch denkbar, dass das Grundelement mit dem Wischblatt oder mit einem Wischblattbauteil einstückig ausgebildet ist. Vorteilhaft weist das Grundelement die Wischarmaufnahme auf. Vorteilhaft ist das Grundelement mit der Wischarmaufnahme einstückig ausgebildet.

Vorteilhaft ist die Wischarmaufnahme so ausgebildet, dass die Lagerachse senkrecht oder weitgehend senkrecht zu einer Wischarmrichtung angeordnet ist. Unter einer Wischarmrichtung soll eine Richtung verstanden werden, welche in Richtung einer größten Längsausdehnung des an der Adaptereinheit montierten Wischarms angeordnet ist, insbesondere in einer Grundstellung. Im unmontierten Zustand ist die Wischarmrichtung die Richtung an der Adaptereinheit, in die ein montierter Wischarm zeigen würde, insbesondere in einer Grundstellung. Unter weitgehend senkrecht soll verstanden werden, dass eine erste Achse mit einer zweiten Achse einen Winkel einschließt, der nicht mehr als 8°, vorteilhaft nicht mehr als 5°, besonders vorteilhaft nicht mehr als 2° von 90° abweicht. Vorteilhaft ist die Lagerachse parallel oder weitgehend parallel zu einer vorgesehenen Wischrichtung angeordnet. Unter weitgehend parallel soll verstanden werden, dass eine erste Achse mit einer zweiten Achse einen Winkel einschließt, der nicht mehr als 8°, vorteilhaft nicht mehr als 5°, besonders vorteilhaft nicht mehr als 2° von 0° abweicht. Vorteilhaft ist die Lagerachse so angeordnet, dass sie in einem nicht wischenden Ruhezustand der an der Fahrzeugscheibe angebrachten Wischvorrichtung - umfassend die Wischarmadaptereinheit, das Wischblatt und den Wischarm - parallel oder weitgehend parallel zu einer Windanströmrichtung bzw. zur einer Fahrzeugfahrrichtung angeordnet ist. Im Folgenden soll unter einer Windanströmrichtung die Richtung verstanden werden, in der der Fahrtwind in einem nicht wischenden Ruhezustand der an der Fahrzeugscheibe angebrachten Wischvorrichtung anströmen würde. Besonders vorteilhaft liegt die Lagerachse in einem am Fahrzeug montierten Zustand parallel zur Fahrzeugscheibe, bevorzugt an jeder Position über eine Wischbewegung.

Unter einen Hauptwinkel ist der Winkel zu verstehen, den die Windabweiserfläche zur Lagerachse aufweist. Vorteilhaft wird der Hauptwinkel um die Wischarmrichtung gemessen. Ein positiver Hauptwinkel zwischen 0° und 90° beschreibt dabei eine Windabweiserfläche, welche wenigstens teilweise zur Windanströmrichtung zugewendet ist. Je näher der Hauptwinkel an 90°, umso stärker ist die Windabweiserfläche der Windanströmrichtung zugewendet. Vorteilhaft wird der Hauptwinkel zwischen der Lagerachse und einer Projektion der Lagerachse auf die Windabweiserfläche aufgespannt, wobei die Projektion vorteilhaft entlang einer Projektionsebene durchgeführt wird, in welcher die Lagerachse liegt und welche senkrecht oder weitgehend senkrecht zur Wischarmrichtung angeordnet ist. Es ist auch möglich, dass die Projektionsebene durch die Lagerachse und einen Normalenvektor bzw. einen mittleren Normalenvektor der Windabweiserfläche aufgespannt wird. Bei einer gekrümmten bzw. nicht ebenen Windabweiserfläche ist es denkbar, dass der Hauptwinkel zwischen der Lagerachse und einer Tangentialebene aufgespannt ist, wobei die Tangentialebene in einem ausgezeichneten Punkt - beispielsweise dem Mittelpunkt - der Windabweiserfläche liegt oder die Tangentialebene eines mittleren Normalenvektors der Windabweiserfläche ist. Unter einem mittleren Normalenvektor ist ein Vektor zu verstehen, der das Mittel über alle oder fast alle Normalenvektoren der Windabweiserfläche darstellt.

Durch die in den Unteransprüchen aufgeführten Merkmale sind vorteilhafte Weiterbildungen der Adaptereinheit möglich.

Dadurch, dass die Windabweiserfläche in Richtung der Lagerachse zumindest bereichsweise konkav ausgebildet ist, werden die aerodynamischen Eigenschaften weiter verbessert. Der durch Fahrtwind erzeugte Anpressdruck kann weiter erhöht werden. Unter konkav soll insbesondere verstanden werden, dass die Windabweiserfläche in das Abdeckelement bzw. in die Adaptereinheit hineingewölbt ist.

Die Adaptereinheit wird weiter verbessert, wenn die Windabweiserfläche in Richtung der Lagerachse zumindest bereichsweise konvex ausgebildet ist. Durch einen konvexen Verlauf der Windabweiserfläche kann eine Windströmung entlang der Windabweiserfläche weitgehend laminar bzw. turbulenzfrei gehalten werden. Das ermöglicht einen stabilen und weitgehend konstanten Anpressdruck. Insbesondere werden auf diese Weise Vibrationen verhindert, welche eine störende Geräuschentwicklung entwickeln können und/oder welche die Adaptereinheit und/oder die Wischvorrichtung beschädigen bzw. in ihrer Wischleistung beinträchtigen können. Unter konvex soll insbesondere verstanden werden, dass die Windabweiserfläche aus dem Abdeckelement bzw. aus der Adaptereinheit herausgewölbt ist.

Die Adaptereinheit wird weiter verbessert, wenn das Abdeckelement und/oder das Grundelement eine hintere Achse aufweist, welche an einer windabgewandten Seite des Abdeckelements und an einer Unterseite bzw. einer der Windabweiserfläche abgewandten Seite des Abdeckelements angeordnet ist und weitgehend parallel zu einer Wischarmrichtung angeordnet ist und die Winabweiserfläche einen senkrechten Mindestabstand zur hinteren Achse zwischen 0.8 cm und 2.0 cm, bevorzugt zwischen 1.0 cm und 1.5 cm, aufweist und die Windabweiserfläche einen senkrechten Maximalabstand zur hinteren Achse zwischen 1.5 cm und 3.0 cm, bevorzugt zwischen 2.0 cm und 2.5 cm aufweist. Auf diese Weise ist die Windabweiserfläche außerhalb eines gedachten Zylindersmantels mit einer Zylinderachse um die hintere Achse und einem Zylinderradius zwischen 0.8 cm und 2.0 cm, bevorzugt zwischen 1.0 cm und 1.5 cm angeordnet. Auf diese Weise ist die Windabweiserfläche innerhalb eines gedachten Zylindersmantels mit einer Zylinderachse um die hintere Achse und einem Zylinderradius zwischen 1.5 cm und 3.0 cm, bevorzugt zwischen 2.0 cm und 2.5 cm angeordnet. Eine auf diese Weise geformte Windabweiserfläche bietet besonders gute aerodynamische Eigenschaften und gleichzeitig genug Baumraum für die Grundeinheit bzw. für die Adaptereinheit.

Die erfindunggemäße Adaptereinheit, insbesondere das Abdeckelement und/oder das Grundelement, weist eine Wischarmöffnung auf, welche einen Wischarmwinkel zwischen -15° und 15°, bevorzugt zwischen -5° und 5°, mit der Windabweiserfläche einschließt. Das hat den Vorteil, dass der Wischarm aerodynamisch besonders günstig aufnehmbar ist. Das verbessert die aerodynamischen Eigenschaften eines Systems aus der Adaptereinheit und dem Wischarm sowie insgesamt die aerodynamischen Eigenschaften der Wischvorrichtung. Unter einer Wischarmöffnung ist eine Öffnung für die Aufnahme des Wischarms und/oder einer Wischstange des Wischarms zu verstehen. Ein montierter Wischarm ragt durch die Wischarmöffnung in die Adaptereinheit hinein und ist dort an die Wischarmaufnahme gekoppelt. Unter dem Wischarmwinkel ist ein Winkel zu verstehen, der zwischen einer Öffnungsrichtung, welche in Richtung der größten Ausdehnung der Wischarmöffnung zeigt und der Windabweiserfläche aufgespannt wird. Ein montierter Wischarm ist mit dem Wischarmwinkel zur Windabweiserfläche angeordnet. Ein negativer Wischarmwinkel bedeutet, dass die Öffnungsrichtung relativ zur Windabweiserfläche im montierten Zustand der Wischarmadaptereinheit mit einer windabgewandten Öffnungsseite in Richtung der Fahrzeugscheibe geneigt ist. Ein positiver Wischarmwinkel bedeutet, dass die Öffnungsrichtung relativ zur Windabweiserfläche im montierten Zustand der Wischarmadaptereinheit mit der windabgewandten Öffnungsseite von der Fahrzeugscheibe weg zeigt.

Die Aerodynamik der Adaptereinheit wird weiter verbessert, wenn eine vordere Tangente in einem vorderen Punkt der Windabweiserfläche mit der Lagerachse einen vorderen Winkel zwischen 30° und 70°, bevorzugt zwischen 45° und 55° einschließt, wobei sich der vordere Punkt an einem windzugewandten Rand der Windabweiserfläche befindet und die vordere Tangente in einer Ebene senkrecht zur Wischarmrichtung angeordnet ist. Der vordere Winkel wird zwischen dem in Windanströmrichtung vom vorderen Punkt aus zeigenden Teil der vorderen Tangente und der Lagerachse aufgespannt.

Die Aerodynamik der Adaptereinheit wird weiter verbessert, wenn eine hintere Tangente in einem hinteren Punkt an der Windabweiserfläche mit der Lagerachse einen vorderen Winkel zwischen 10° und 60°, bevorzugt zwischen 25° und 35° einschließt, wobei sich der hintere Punkt an einem windabgewandten Rand der Windabweiserfläche befindet und die hintere Tangente in einer Ebene senkrecht zur Wischarmrichtung angeordnet ist. Der hintere Winkel wird zwischen dem in Windanströmrichtung vom hinteren Punkt aus zeigenden Teil der hinteren Tangente und der Lagerachse aufgespannt.

Die Aerodynamik der Adaptereinheit wird weiter verbessert, wenn eine mittlere Tangente in einem mittleren Punkt an der Windabweiserfläche mit der Lagerachse einen vorderen Winkel zwischen 25° und 65°, bevorzugt zwischen 40° und 50° einschließt, wobei sich der mittlere Punkt in der Mitte der Windabweiserfläche zwischen dem windabgewandten Rand und dem windzugewandten Rand befindet und die mittlere Tangente in einer Ebene senkrecht zur Wischarmrichtung angeordnet ist. Der mittlere Winkel wird zwischen dem in Windanströmrichtung vom mittleren Punkt aus zeigenden Teil der mittleren Tangente und der Lagerachse aufgespannt.

Weist die Adaptereinheit eine Luftleitfläche auf, welche hinter dem windabgewandten Rand der Windabweiserfläche angeordnet ist und mit der Lagerachse einen Luftleitwinkel zwischen -25° und -65°, bevorzugt zwischen - 40° und -50° einschließt, hat das den Vorteil, dass Turbulenzen hinter der Windabweiserfläche minimiert werden. Ein negativer Luftleitwinkel bedeutet, dass die Luftleitfläche relativ zur Lagerachse im montierten Zustand der Wischarmadaptereinheit mit einer windabgewandten Luftleitflächenseite in Richtung der Fahrzeugscheibe geneigt ist. Bevorzugt weist das Abdeckelement die Luftleitfläche auf. Besonders bevorzugt ist das Abdeckelement mit der Luftleitfläche einstückig ausgebildet. In Varianten weist das Grundelement die Luftleitfläche auf. In solchen Varianten ist das Grundelement bevorzugt mit der Luftleitfläche einstückig ausgebildet.

In vorteilhaften Ausführungsvarianten weist die Luftleitfläche einen Höhenversatz zwischen 1 mm und 6 mm, bevorzugt zwischen 2 mm und 5 mm, besonders bevorzugt zwischen 3 mm und 4 mm zur Windabweiserfläche auf, wobei der Höhenversatz entlang einer Flächennormalen einer Adaptergrundfläche verläuft. Auf diese Weise können Turbulenzen auf einer der Windanströmrichtung abgewandten Seite der Windabweiserfläche noch besser minimiert werden. Die Adaptergrundfläche ist im montierten Zustand der Wischarmadaptereinheit bevorzugt parallel oder weitgehend parallel zur Fahrzeugscheibe ausgerichtet. Vorteilhaft weist das Grundelement die Adaptergrundfläche auf.

Eine weitere Möglichkeit, Turbulenzen zu verhindern ist es, wenn die Windabweiserfläche mit ihrem windabgewandten Rand die Adaptereinheitgrundfläche um wenigstens 1 mm in einer Windanströmrichtung überragt, bevorzugt um wenigstens 2 mm, besonders bevorzugt um wenigstens 5 mm. Auf diese Weise wird ein Spoiler ausgebildet, der einen besonders vorteilhaften Luftstrom ermöglicht.

Ist das Abdeckelement mit dem Grundelement fest verbindbar ausgebildet, so dass das mit dem Grundelement verbundene Abdeckelement gegenüber dem Grundelement weitgehend unbeweglich ist, hat das den Vorteil, dass die Adaptereinheit besonders robust und haltbar ist. Insbesondere ist die Adaptereinheit auf diese Weise vor Beschädigungen und/oder Abnutzungen durch im Betrieb auftretenden Vibrationen - insbesondere in Folge des Fahrtwindes - geschützt und ermöglicht so einen zuverlässigen Betrieb. Beispielsweise ist es denkbar, dass das Abdeckelement mit dem Grundelement durch eine Steckverbindung und/oder eine Clipverbindung und/oder eine Rastverbindung und/oder eine Schraubverbindung verbindbar ausgebildet ist.

Besonders vorteilhaft ist eine Adaptereinheit, bei der das Abdeckelement auf das Grundelement schiebbar ausgebildet ist, insbesondere entlang der Wischarmrichtung und/oder weitgehend entlang der Wischarmrichtung schiebbar ausgebildet ist. Das ermöglicht eine zuverlässige Verbindung bei einer geringen Bauhöhe. Auf diese Weise können gute aerodynamische Eigenschaften der Adaptereinheit sichergestellt werden. Unter weitgehend entlang der Wischarmrichtung schiebbar ausgebildet soll entlang einer Schieberichtung schiebbar verstanden werden, wobei die Schieberichtung mit der Wischarmrichtung einen Winkel einschließt, der nicht mehr als 8°, vorteilhaft nicht mehr als 5°, besonders vorteilhaft nicht mehr als 2° von 0° abweicht.

Eine Adaptereinheit, bei der das Abdeckelement auf das Grundelement aufschiebbar ausgebildet ist, ist in vorteilhaften Ausführungsformen so ausgebildet, dass Grundelement eine Führungsschiene aufweist und das Abdeckelement ein Führungselement aufweist, wobei das Führungselement dazu eingerichtet ist, entlang der Führungsschiene führbar zu sein und wobei das Abdeckelement in einem auf das Grundelement über die Führungsschiene und das Führungselement eingeschobenen Zustand senkrecht zu einer Schieberichtung gegenüber dem Grundelement weitgehend unbeweglich ist.

In besonders vorteilhaften Varianten weist die Führungsschiene eine Führungsfeder auf und das Führungselement weist eine Führungsnut auf, wobei die Führungsfeder formschlüssig in der Führungsnut führbar ausgebildet ist. Das ermöglicht eine besonders stabile und zuverlässige Verbindung zwischen dem Grundelement und dem Abdeckelement.

Eine Adaptereinheit, bei der die Wischarmaufnahme dazu eingerichtet ist, einen Wischarm mit einem zungenförmigen Verbindungselement aufzunehmen und/oder einen Wischarm mit einem sichelförmigen Verbindungselement aufzunehmen und/oder einen Wischarm mit einem Verbindungselement, welches wenigstens teilweise ein Ovalsegment, insbesondere Kreissegment aufweist, wobei das Ovalsegment bevorzugt in einer Ebene mit einer Wischarmlängsachse liegt, aufzunehmen, hat den Vorteil, dass auf diese Weise eine besonders einfache und stabile Verbindung zwischen der Adaptereinheit und dem Wischarm möglich ist.

Besonders vorteilhaft ist die Adaptereinheit, wenn die Wischarmaufnahme einen Zylinder und/oder ein Zylindersegment aufweist, wobei der Zylinder und/oder das Zylindersegment zur Kontaktierung des Verbindungselements des Wischarms eingerichtet ist und wobei eine Zylinderachse des Zylinders und/oder des Zylindersegments parallel oder weitgehend parallel zur Lagerachse ausgerichtet ist.

Weitere Vorteile hat ein Wischsystem aus einem Wischarm und einer Adaptereinheit gemäß der vorliegenden Erfindung, wobei der Wischarm ein zungenförmiges Verbindungselement aufweist und/oder ein sichelförmiges Verbindungselement aufweist und/oder ein Verbindungselement aufweist, welches wenigstens teilweise ein Ovalsegment, insbesondere Kreissegment aufweist, wobei das Ovalsegment bevorzugt in einer Ebene mit der Wischarmlängsachse liegt. Ein solches Wischsystem bietet neben der Stabilität der Verbindung zwischen Wischarm und Adaptereinheit auch eine einfache Montierbarkeit durch einen Benutzer.

Ein Wischsystem bei dem der Wischarm zwischen dem Verbindungselement und einem Mittelteil des Wischarms um eine Wischarmrichtung tordiert ist, bevorzugt um einen Torsionswinkel zwischen 20° und 50°, besonders bevorzugt zwischen 30° und 40° tordiert ist, hat den Vorteil, dass eine Aerodynamik im einem Verbindungsbereich zwischen dem Wischarm und der Adaptereinheit optimiert werden kann und gleichzeitig der Wischarm in dem Mittelteil eine Ausrichtung haben kann, welche beispielsweise hinsichtlich einer Anpresskraft des Wischarms auf das Verbindungselement optimiert ist. Der Mittelteil des Wischarms liegt entlang der Wischarmrichtung auf einer dem Verbindungselement gegenüberliegenden Seite des Wischarms. Ein Torsionswinkel wird bevorzugt durch eine erste Wischarmachse und eine zweite Wischarmachse aufgespannt, wobei die erste Wischarmachse und die zweite Wischarmachse jeweils senkrecht zur Wischarmrichtung ausgerichtet sind und die erste Wischarmachse in eine Richtung einer größten Breitenausdehnung des Wischarms am Verbindungselement ausgerichtet ist und die zweite Wischarmachse in eine Richtung einer größten Breitenausdehnung des Wischarms am Mittelteil ausgerichtet ist.

Weist der Wischarm zwischen dem Verbindungselement und dem Mittelteil eine Kröpfung auf und/oder weist das Verbindungselement und/oder ein Endstück des Wischarms senkrecht zur Wischarmrichtung einen Versatz zum Mittelteil auf, welcher zwischen 0.5 cm und 5.0 cm, bevorzugt zwischen 1.5 cm und 4.0 cm, besonders bevorzugt zwischen 2.5 cm und 3.0 cm beträgt. Bevorzugt sind dabei das Mittelteil des Wischarms und ein Endstück des Wischarms parallel oder weitgehend parallel zueinander ausgerichtet, wobei das Endstück ein Bereich des Wischarms zwischen dem Verbindungselement und der Kröpfung bzw. einer Versatzstelle zum Mittelteil ist. Sind Mittelteil und Endstück nicht parallel oder weitgehend parallel zueinander angeordnet, so definiert bevorzugt die Längsausrichtung des Mittelteils die Wischarmrichtung.

### Zeichnungen

In den Zeichnungen sind Ausführungsbeispiele der Adaptereinheit gemäß der vorliegenden Erfindung sowie des Wischsystems gemäß der vorliegenden Erfindung dargestellt und in der nachfolgenden Beschreibung näher erläutert. Es zeigen
Figur 1 eine Wischvorrichtung,
Figur 2 und 3 einen Schnitt durch die Adaptereinheit,
Figuren 4 bis 7 Schnitte durch verschieden Varianten der Adaptereinheit,
Figur 8 eine perspektivische Ansicht einer Variante der Adaptereinheit,
Figur 9 ein Wischsystem und
Figur 10 einen Schnitt durch eine Variante der Adaptereinheit.

### Beschreibung

In den verschiedenen Ausführungsvarianten erhalten gleiche Teile die gleichen Bezugszahlen.

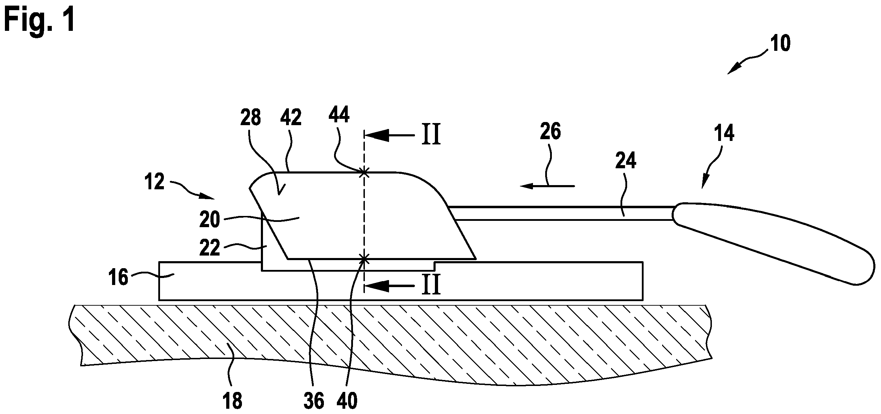

In der Figur 1 ist schematisch eine Wischvorrichtung 10 mit einer Adaptereinheit 12, einem Wischarm 14 und einem Wischblatt 16 in einer Seitenansicht gezeigt. Das Wischblatt 16 ist als Flachwischblatt ausgebildet. Das Wischblatt 16 ist zum Reinigen einer Fahrzeugscheibe 18 vorgesehen. Die Adaptereinheit 12 weist ein Abdeckelement 20 auf. Die Adaptereinheit weist ein Grundelement 22 auf. Der Wischarm 16 weist eine Wischstange 24 auf. Im Ausführungsbeispiel ist eine Hauptlängserstreckungsrichtung der Wischarmadaptereinheit parallel zu einer Wischarmrichtung 26 angeordnet. Eine Hauptlängserstreckungsrichtung des Wischblatts ist parallel zur Wischarmrichtung angeordnet. In vorteilhaften Varianten ist die Hauptlängserstreckungsrichtung der Wischarmadaptereinheit zumindest weitgehend parallel zu einer Wischarmrichtung 26 angeordnet. In vorteilhaften Varianten ist Hauptlängserstreckungsrichtung des Wischblatts ist zumindest weitgehend parallel zur Wischarmrichtung angeordnet.

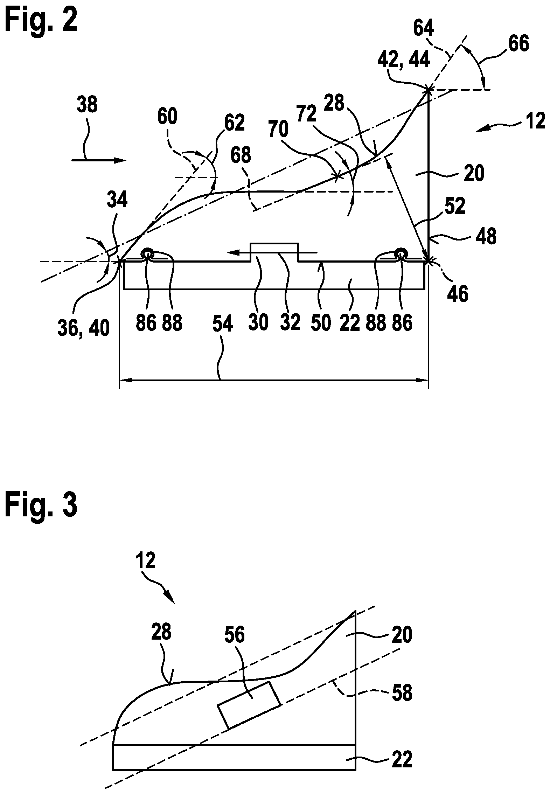

Figur 2 zeigt einen Schnitt durch die Adaptereinheit 12 entlang der Linie II-II (siehe Figur 1). Die Zeichenebene der Figur 2 ist senkrecht zur Wischarmrichtung 26 angeordnet. Das Abdeckelement weist eine Windabweiserfläche 28 auf. Das Grundelement weist eine Wischarmaufnahme 30 auf. Die Wischarmaufnahme 30 ist dazu eingerichtet, den Wischarm um eine Lagerachse 32 schwenkbar aufzunehmen. Ein Hauptwinkel 34 zwischen der Windabweiserfläche und der Lagerachse beträgt im Ausführungsbeispiel 40°.

Im Ausführungsbeispiel ist die Windabweiserfläche bereichsweise konvex ausgebildet. Beginnend mit einem windzugewandten Rand 36, verläuft die Windweiserfläche in Richtung einer Windanströmrichtung 38 zunächst konvex. Die Windanströmrichtung 38 ist im Ausführungsbeispiel weitgehend parallel zur Lagerachse 32 ausgerichtet. Der windzugewandte Rand 36 (siehe Figur 1) ist in Figur 2 mit einem vorderen Punkt 40 markiert, welcher auf dem windzugewandten Rand 36 liegt.

Im Ausführungsbeispiel ist die Windabweiserfläche bereichsweise konkav ausgebildet. Beginnend mit einem windabgewandten Rand 42, verläuft die Windabweiserfläche in Gegenrichtung der Windanströmrichtung 38 zunächst konkav. Der windabgewandte Rand 42 (siehe Figur 1) ist in Figur 2 mit einem hinteren Punkt 44 markiert, welcher auf dem windabgewandten Rand 42 liegt.

Eine hintere Achse 46 ist an einer windabgewandten Seite 48 des Abdeckelements und an einer Unterseite 50 des Abdeckelements angeordnet. Die hintere Achse 46 verläuft im Ausführungsbeispiel weitgehend parallel zur Wischarmrichtung 26. In Figur 2 verläuft die hintere Achse 46 senkrecht zur Bildebene und ist durch einen Punkt markiert. Im Ausführungsbeispiel beträgt ein senkrechter Mindestabstand 52 der Windabweiserfläche zur hinteren Achse 1.2 cm. Ein senkrechter Maximalabstand 54 der Windabweiserfläche zur hinteren Achse beträgt 2.3 cm.

Figur 3 zeigt eine Seitenansicht auf die Adaptereinheit aus der Wischarmrichtung 26 (siehe Figur 1). Das Abdeckelement 20 weist im Ausführungsbeispiel eine Wischarmöffnung 56 auf. Die Wischarmöffnung schließt mit der Windabweiserfläche einen Wischarmwinkel von 0° ein. Eine Öffnungsrichtung 58 der Wischarmöffnung ist parallel zur Windabweiserfläche angeordnet. Die Wischarmöffnung ist eine Öffnung im Abdeckelement, durch welche der Wischarm in die Adaptereinheit einführbar ist. Der Wischarm ist in der Adaptereinheit an der Wischarmaufnahme 30 befestigbar.

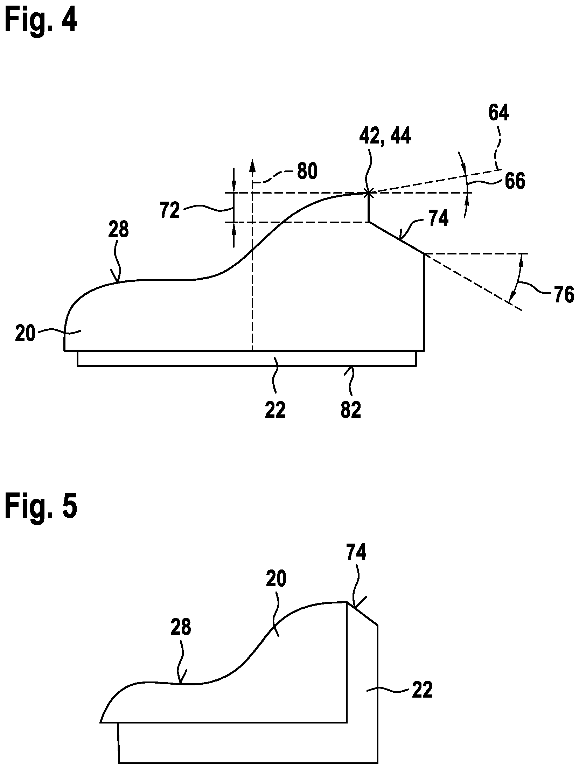

Im Ausführungsbeispiel schließt eine vordere Tangente 60 im vorderen Punkt 40 einen vorderen Winkel 62 von 50° mit der Lagerachse ein (siehe Figur 2). Eine hintere Tangente 64 im hinteren Punkt 44 schließt mit der Lagerachse einen hinteren Winkel 66 von 55° ein. In Figur 4 ist eine alternative Ausführungsform abgebildet, in welcher der hintere Winkel 66 10° beträgt.

Im Ausführungsbeispiel schließt eine mittlere Tangente 68 in einem mittleren Punkt 70 einen mittleren Winkel 72 von 45° mit der Lagerachse ein.

Die in Figur 4 abgebildete alternative Ausführungsform weist eine Luftleitfläche 74 auf, welche an dem windabgewandten Rand der Windabweiserfläche angeordnet ist. Die Luftleitfläche schließt mit der Lagerachse einen Luftleitwinkel 76 von -30° ein. Die Luftleitfläche weist einen Höhenversatz 78 von 3 mm zur Windabweiserfläche auf. Der Höhenversatz 78 wird entlang einer Flächennormalen 80 einer Adaptergrundfläche 82 gemessen. In der in Figur 4 abgebildeten Ausführung weist das Abdeckelement 20 die Luftleitfläche 74 auf. In einer in Figur 5 abgebildeten Variante weist das Grundelement 22 die Luftleitfläche 22 auf. In dieser Variante hat die Luftleitfläche keinen Höhenversatz 78 bzw. einen Höhenversatz von 0 mm zur Windabweiserfläche 28.

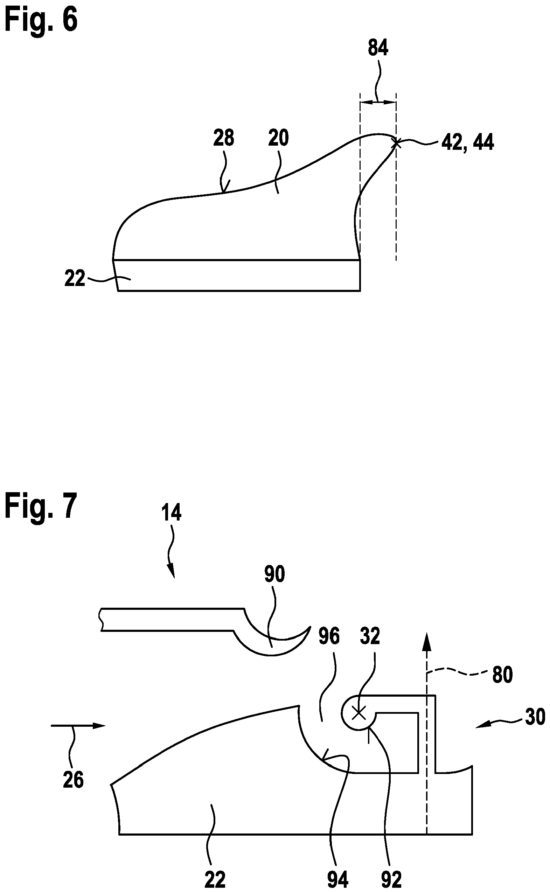

In Figur 6 ist eine weitere Variante des Ausführungsbeispiels gezeigt, in welcher die Windabweiserfläche mit ihrem windabgewandten Rand 42 um einen Überhang 84 von 3 mm in Windanströmrichtung überragt.

Im Ausführungsbeispiel ist das Abdeckelement entlang der Wischarmrichtung auf das Grundelement schiebbar ausgebildet. Das Grundelement weist zwei Führungsschienen 86 auf, welche jeweils auf einer windabgewandten Seite des Grundelements und auf einer windzugewandten Seite des Grundelements angeordnet sind (siehe Figur 2). Die Führungsschienen sind jeweils parallel zur Wischarmrichtung angeordnet. Das Abdeckelement weist zwei auf die Führungsschienen 86 passende Führungselemente 88 auf. Die Führungsschienen 86 weisen jeweils eine Führungsfeder auf. Die Führungselemente 88 weisen jeweils eine Führungsnut auf. Die Führungsnut umschließt jeweils teilweise die Führungsfeder. Auf diese Weise ist das auf das Grundelement aufgeschobene Abdeckelement senkrecht zur Wischarmrichtung weitgehend unbeweglich. Das Grundelement und das Abdeckelement weisen eine nicht abgebildete Rastverbindung auf, welche dazu eingerichtet ist einzurasten, sobald das Abdeckelement vollständig über das Grundelement geschoben ist, so dass das Abdeckelement in dieser Position fixiert ist und entlang der Wischarmrichtung weitgehend unbeweglich ist.

Figur 7 zeigt eine Ansicht auf eine Variante des Grundelements 22. Die Zeichenebene der Figur 7 ist senkrecht zur Lagerachse 32 angeordnet. Die Position der Lagerachse 32 ist in Figur 7 durch einen Punkt markiert. Die Wischeraufnahme 30 ist dazu eingerichtet, einen Wischarm 14 mit einem zungenförmigen bzw. sichelförmigen Verbindungselement 90 aufzunehmen. Das Verbindungselement 90 weist in der in Figur 7 abgebildeten Variante des Wischarms ein Ovalsegment auf, welches an einem vom Wischarm wegweisenden Ende spitz zuläuft. Die Wischarmaufnahme 30 weist ein Zylindersegment 92 auf, welches zur Kontaktierung und Lagerung des Verbindungselements 90 vorgesehen ist. Das Zylindersegment 92 bildet zusammen mit einem konkav geformten Grundelementoberflächenstück 94 einen Einführkanal 96 für das Verbindungselement 90. Das Verbindungselement 90 ist entlang der Flächennormalen 80 in den Einführkanal 96 einführbar. Wird der Wischarm 14 nach dem Einführen in den Einführkanal in eine zur Wischarmrichtung 26 parallele Position gedreht, hackt sich das Verbindungselement 90 in der Wischarmaufnahme 30 ein und ist nicht mehr in Wischarmrichtung verschiebbar. Wird das Grundelement mit dem Abdeckelement abgedeckt, so ist der Wischarm in seiner Bewegung um die Lagerachse 32 so weit beschränkt, dass das Verbindungselement stets mit der Wischarmaufnahme gekoppelt bleibt. Die Wischarmöffnung ist bevorzugt so ausgebildet, dass der Wischarm in einem gewünschten Umfang um die Lagerachse schwenkbar ist.

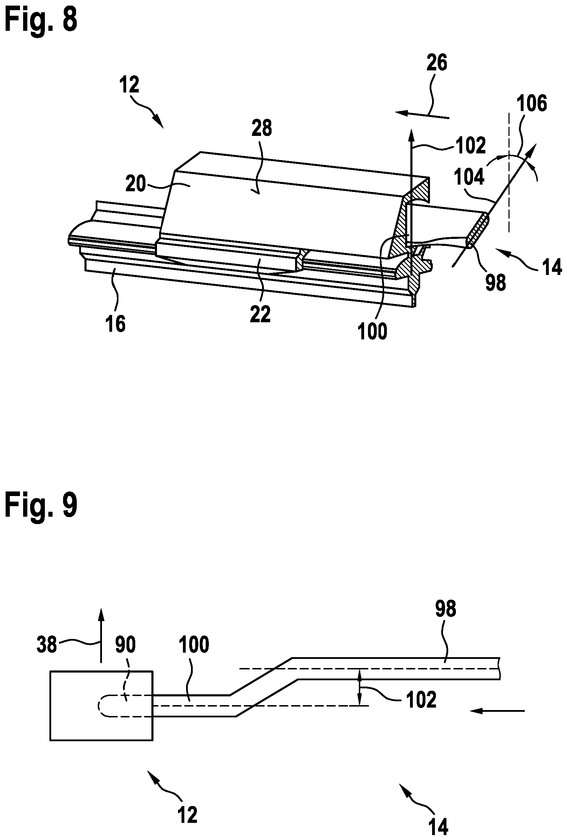

In Figur 8 ist eine isometrische Ansicht einer Variante des Wischsystems aus Wischarm 14 und Adaptereinheit 12 abgebildet. Der Wischarm ist zwischen einem Mittelteil 98 und einem Endstück 100 um die Wischarmrichtung 26 tordiert. Zwischen einer ersten Wischarmachse 102 und einer zweiten Wischarmachse 104 wird ein Torsionswinkel 106 von 45° aufgespannt.

In Figur 9 ist eine Aufsicht auf eine weitere Variante des Wischsystems aus Wischarm 14 und Adaptereinheit 12 abgebildet. Die Zeichenebene wird durch die Windanströmrichtung 38 und die Wischarmrichtung 26 aufgespannt. Das Endstück 100 mit dem Verbindungselement 90 weist zum Mittelteil 98 einen Versatz 102 von 2.0 cm in Windanströmrichtung auf. In der in Figur 9 abgebildeten Variante sind das Mittelteil und das Endstück weitgehend parallel zueinander ausgerichtet.

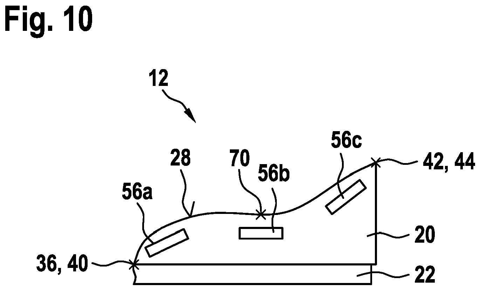

Die Wischarmaufnahme 56 kann an unterschiedlichen relativ zur Windabweiserfläche 28 positioniert sein. In Figur 10 sind mögliche Positionen der Wischarmaufnahme illustriert. Eine erste Wischarmaufnahme 56a ist am vorderen Punkt 40 angeordnet. Eine zweite Wischarmaufnahme 56b ist am mittleren Punk 70 angeordnet. Eine dritte Wischarmaufnahme 56c ist am hinteren Punkt 44 angeordnet.

In vorteilhaften Ausführungsformen weist die Windabweiserfläche 28 eine veränderte bzw. besondere Oberflächenstruktur auf. Die Oberfläche kann wenigstens bereichsweise aufgeraut sein und/oder eine Haifischhautstruktur aufweisen und/oder eine Golfballstruktur aufweisen. Eine solche Oberflächenstruktur beeinflusst den über sie strömenden Luftstrom. Auf diese Weise lassen sich die aerodynamischen Eigenschaften der Windabweiserfläche verbessern. Insbesondere ist es möglich, über die Windabweiserfläche wirkende Anpresskräfte durch eine Auswahl der Art und Anordnung der veränderten Oberflächenstruktur präzise einzustellen.

## Patentansprüche

1. Adaptereinheit (12) die zu einer Kopplung, insbesondere lösbaren Kopplung eines Wischblatts mit einem Wischarm (14) vorgesehen ist, aufweisend ein Grundelement (22), ein Abdeckelement (20) und eine Wischarmaufnahme (30), welche dazu eingerichtet ist, den Wischarm (14) um eine Lagerachse (32) schwenkbar aufzunehmen, wobei das Abdeckelement (20) mit dem Grundelement (22) verbindbar ausgebildet ist und die Wischarmaufnahme (30) weitgehend abdeckt, und wobei das Abdeckelement (20) eine Windabweiserfläche (28) aufweist, welche dazu vorgesehen ist, eine anströmende Luft abzuweisen und das Wischblatt (16) an eine Fahrzeugscheibe zu drücken, und wobei das Grundelement (22) dazu eingerichtet ist ein Wischblatt (16) aufzunehmen, wobei die Windabweiserfläche (28) einen Hauptwinkel zwischen 25° und 75°, bevorzugt zwischen 40° und 60° mit der Lagerachse (32) einschließt, **dadurch gekennzeichnet, dass** die Adaptereinheit (12) insbesondere das Abdeckelement (20) und/oder das Grundelement (22), eine Wischarmöffnung aufweist, welche einen Wischarmwinkel zwischen -15° und 15°, bevorzugt zwischen -5° und 5°, mit der Windabweiserfläche (28) einschließt.

2. Adaptereinheit nach Anspruch 1, **dadurch gekennzeichnet, dass** die Windabweiserfläche in Richtung der Lagerachse zumindest bereichsweise konkav ausgebildet ist.

3. Adaptereinheit nach einem der vorhergehenden Ansprüche, **dadurch gekennzeichnet, dass** die Windabweiserfläche in Richtung der Lagerachse zumindest bereichsweise konvex ausgebildet ist.

4. Adaptereinheit nach einem der vorhergehenden Ansprüche, **dadurch gekennzeichnet, dass** das Abdeckelement und/oder das Grundelement eine hintere Achse (46) aufweist, welche an einer windabgewandten Seite des Abdeckelements und an einer Unterseite bzw. einer der Windabweiserfläche abgewandten Seite des Abdeckelements angeordnet ist und weitgehend parallel zu einer Wischarmrichtung angeordnet ist und die Windabdweiserfläche einen senkrechten Mindestabstand zur hinteren Achse zwischen 0.8 cm und 2.0 cm, bevorzugt zwischen 1.0 cm und 1.5 cm, aufweist und die Windabweiserfläche einen senkrechten Maximalabstand zur hinteren Achse zwischen 1.5 cm und 3.0 cm, bevorzugt zwischen 2.0 cm und 2.5 cm aufweist.

5. Adaptereinheit nach einem der vorhergehenden Ansprüche, **dadurch gekennzeichnet, dass** eine vordere Tangente (60) in einem vorderen Punkt (40) der Windabweiserfläche mit der Lagerachse einen vorderen Winkel zwischen 30° und 70°, bevorzugt zwischen 45° und 55° einschließt, wobei sich der vordere Punkt an einem windzugewandten Rand (36) der Windabweiserfläche befindet und die vordere Tangente in einer Ebene senkrecht zur Wischarmrichtung angeordnet ist.

6. Adaptereinheit nach einem der vorhergehenden Ansprüche, **dadurch gekennzeichnet, dass** eine hintere Tangente (64) in einem hinteren Punkt (44) an der Windabweiserfläche mit der Lagerachse einen vorderen Winkel zwischen 10° und 60°, bevorzugt zwischen 25° und 35° einschließt, wobei sich der hintere Punkt an einem windabgewandten Rand (42) der Windabweiserfläche befindet und die hintere Tangente in einer Ebene senkrecht zur Wischarmrichtung angeordnet ist.

7. Adaptereinheit nach einem der vorhergehenden Ansprüche, **dadurch gekennzeichnet, dass** eine mittlere Tangente (68) in einem mittleren Punkt (70) an der Windabweiserfläche mit der Lagerachse einen vorderen Winkel zwischen 25° und 65°, bevorzugt zwischen 40° und 50° einschließt, wobei sich der mittlere Punkt in der Mitte der Windabweiserfläche zwischen dem windabgewandten Rand und dem windzugewandten Rand befindet und die mittlere Tangente in einer Ebene senkrecht zur Wischarmrichtung angeordnet ist.

8. Adaptereinheit nach einem der vorhergehenden Ansprüche, **dadurch gekennzeichnet, dass** die Adaptereinheit eine Luftleitfläche (74) aufweist welche hinter dem windabgewandten Rand der Windabweiserfläche angeordnet ist und mit der Lagerachse einen Luftleitwinkel zwischen -25° und -65°, bevorzugt zwischen -40° und -50° einschließt.

9. Adaptereinheit nach einem der vorhergehenden Ansprüche, **dadurch gekennzeichnet, dass** die Windabweiserfläche mit ihrem windabgewandten Rand eine Adaptereinheitgrundfläche (82) um wenigstens 1 mm in einer Windanströmrichtung überragt, bevorzugt um wenigstens 2 mm, besonders bevorzugt um wenigstens 5 mm.

10. Adaptereinheit nach einem der vorhergehenden Ansprüche, **dadurch gekennzeichnet, dass** das Abdeckelement mit dem Grundelement fest verbindbar ausgebildet ist, so dass das mit dem Grundelement verbundene Abdeckelement gegenüber dem Grundelement weitgehend unbeweglich ist.

11. Adaptereinheit nach einem der vorhergehenden Ansprüche, **dadurch gekennzeichnet, dass** das Abdeckelement auf das Grundelement schiebbar ausgebildet ist, insbesondere entlang der Wischarmrichtung und/oder weitgehend entlang der Wischarmrichtung schiebbar ausgebildet ist.

12. Adaptereinheit nach einem der vorhergehenden Ansprüche, **dadurch gekennzeichnet, dass** die Wischarmaufnahme dazu eingerichtet ist, einen Wischarm mit einem zungenförmigen Verbindungselement aufzunehmen und/oder einen Wischarm mit einem sichelförmigen Verbindungselement aufzunehmen und/oder einen Wischarm mit einem Verbindungselement, welches wenigstens teilweise ein Ovalsegment, insbesondere Kreissegment aufweist, wobei das Ovalsegment bevorzugt in einer Ebene mit einer Wischarmlängsachse liegt, aufzunehmen.

13. Adaptereinheit nach Anspruch 12, **dadurch gekennzeichnet, dass** die Wischarmaufnahme einen Zylinder und/oder ein Zylindersegment aufweist, wobei der Zylinder und/oder das Zylindersegment zur Kontaktierung des Verbindungselements des Wischarms eingerichtet ist und wobei eine Zylinderachse des Zylinders und/oder des Zylindersegments parallel oder weitgehend parallel zur Lagerachse ausgerichtet ist.

14. Adaptereinheit aus einem Wischarm und einer Adaptereinheit nach einem der vorhergehenden Ansprüche, **dadurch gekennzeichnet, dass** der Wischarm ein zungenförmiges Verbindungselement aufweist und/oder ein sichelförmiges Verbindungselement aufweist und/oder ein Verbindungselement aufweist, welches wenigstens teilweise ein Ovalsegment, insbesondere Kreissegment aufweist, wobei das Ovalsegment bevorzugt in einer Ebene mit der Wischarmlängsachse liegt.

15. Adaptereinheit nach Anspruch 14, **dadurch gekennzeichnet, dass** der Wischarm zwischen dem Verbindungselement und einem Mittelteil des Wischarms um die Wischarmrichtung tordiert ist, bevorzugt um einen Torsionswinkel zwischen 20° und 50°, besonders bevorzugt zwischen 30° und 40° tordiert ist.

16. Adaptereinheit nach einem der Ansprüche 14 oder 15, dass der Wischarm zwischen dem Verbindungselement und dem Mittelteil eine Kröpfung aufweist und/oder dass das Verbindungselement und/oder ein Endstück des Wischarms senkrecht zur Wischarmrichtung einen Versatz zum Mittelteil aufweist, welcher zwischen 0.5 cm und 5.0 cm, bevorzugt zwischen 1.5 cm und 4.0 cm, besonders bevorzugt zwischen 2.5 cm und 3.0 cm beträgt.

## Claims

1. Adapter unit (12), which is provided for coupling, in particular releasable coupling, of a wiper blade to a wiper arm (14), having a base element (22), a cover element (20) and a wiper arm receptacle (30) which is configured to receive the wiper arm (14) pivotably about a bearing axis (32), wherein the cover element (20) is connectable to the base element (22) and largely covers the wiper arm receptacle (30), and wherein the cover element (20) has a wind deflector surface (28), which is provided to deflect an incident flow of air and to press the wiper blade (16) onto a vehicle window, and wherein the base element (22) is configured to receive a wiper blade (16), wherein the wind deflector surface (28) encloses a main angle of between 25° and 75°, preferably of between 40° and 60°, with the bearing axis (32), **characterized in that** the adapter unit (12), in particular the cover element (20) and/or the base element (22), has a wiper arm opening which encloses a wiper arm angle of between -15° and 15°, preferably of between -5° and 5°, with the wind deflector surface (28).

2. Adapter unit according to Claim 1, **characterized in that** the wind deflector surface is at least in part concave in the direction of the bearing axis.

3. Adapter unit according to one of the preceding claims, **characterized in that** the wind deflector surface is at least in part convex in the direction of the bearing axis.

4. Adapter unit according to one of the preceding claims, **characterized in that** the cover element and/or the base element has a rear axis (46) which is arranged on a side of the cover element facing away from the wind and on an underside or a side of the cover element facing away from the wind deflector surface and is arranged largely parallel to a wiper arm direction, and the wind deflector surface has a perpendicular minimum distance to the rear axis of between 0.8 cm and 2.0 cm, preferably of between 1.0 cm and 1.5 cm, and the wind deflector surface has a perpendicular maximum distance to the rear axis of between 1.5 cm and 3.0 cm, preferably of between 2.0 cm and 2.5 cm.

5. Adapter unit according to one of the preceding claims, **characterized in that** a front tangent (60) at a front point (40) of the wind deflector surface encloses, with the bearing axis, a front angle of between 30° and 70°, preferably of between 45° and 55°, wherein the front point is located at a wind-facing edge (36) of the wind deflector surface, and the front tangent is arranged in a plane perpendicular to the wiper arm direction.

6. Adapter unit according to one of the preceding claims, **characterized in that** a rear tangent (64) at a rear point (44) on the wind deflector surface encloses, with the bearing axis, a front angle of between 10° and 60°, preferably of between 25° and 35°, wherein the rear point is located at an edge (42) of the wind deflector surface facing away from the wind, and the rear tangent is arranged in a plane perpendicular to the wiper arm direction.

7. Adapter unit according to one of the preceding claims, **characterized in that** a central tangent (68) at a central point (70) on the wind deflector surface encloses, with the bearing axis, a front angle of between 25° and 65°, preferably of between 40° and 50°, wherein the central point is located at the centre of the wind deflector surface between the edge facing away from the wind and the edge facing the wind, and the central tangent is arranged in a plane perpendicular to the wiper arm direction.

8. Adapter unit according to one of the preceding claims, **characterized in that** the adapter unit has an air guide surface (74) which is arranged behind the edge of the wind deflector surface facing away from the wind and encloses, with the bearing axle, an air guide angle of between -25° and -65°, preferably of between -40° and -50°.

9. Adapter unit according to one of the preceding claims, **characterized in that** the wind deflector surface, with its edge facing away from the wind, protrudes beyond an adapter unit base surface (82) by at least 1 mm in an incident wind flow direction, preferably by at least 2 mm, particularly preferably by at least 5 mm.

10. Adapter unit according to one of the preceding claims, **characterized in that** the cover element is firmly connectable to the base element, such that the cover element connected to the base element is largely immovable relative to the base element.

11. Adapter unit according to one of the preceding claims, **characterized in that** the cover element is designed to be slidable onto the base element, in particular designed to be slidable along the wiper arm direction and/or largely along the wiper arm direction.

12. Adapter unit according to one of the preceding claims, **characterized in that** the wiper arm receptacle is configured to receive a wiper arm with a tongue-shaped connecting element and/or to receive a wiper arm with a crescent-shaped connecting element and/or to receive a wiper arm with a connecting element which at least in part has an oval segment, in particular a circle segment, wherein the oval segment preferably lies in a plane with a longitudinal axis of the wiper arm.

13. Adapter unit according to Claim 12, **characterized in that** the wiper arm receptacle has a cylinder and/or a cylinder segment, wherein the cylinder and/or the cylinder segment is configured for contacting the connecting element of the wiper arm, and wherein a cylinder axis of the cylinder and/or of the cylinder segment is oriented parallel or largely parallel to the bearing axis.

14. Adapter unit composed of a wiper arm and of an adapter unit according to one of the preceding claims, **characterized in that** the wiper arm has a tongue-shaped connecting element and/or has a crescent-shaped connecting element and/or has a connecting element, which at least in part has an oval segment, in particular a circle segment, wherein the oval segment preferably lies in a plane with the longitudinal axis of the wiper arm.

15. Adapter unit according to Claim 14, **characterized in that** the wiper arm is twisted, between the connecting element and a central part of the wiper arm, about the wiper arm direction, preferably twisted by a torsion angle of between 20° and 50°, particularly preferably of between 30° and 40°.

16. Adapter unit according to either of Claims 14 and 15, **characterized in that** the wiper arm has a crank between the connecting element and the central part, and/or **in that** the connecting element and/or an end piece of the wiper arm perpendicular to the wiper arm direction has an offset with respect to the central part, which offset is between 0.5 cm and 5.0 cm, preferably between 1.5 cm and 4.0 cm, particularly preferably between 2.5 cm and 3.0 cm.

## Revendications

1. Unité d'adaptation (12) prévue pour une liaison, en particulier une liaison amovible, d'un balai d'essuie-glace à un bras d'essuie-glace (14), présentant un élément de base (22), un élément de recouvrement (20) et un logement (30) de bras d'essuie-glace, qui est conçu pour recevoir le bras d'essuie-glace (14) de manière pivotante autour d'un axe de palier (32), l'élément de recouvrement (20) étant réalisé de manière à être apte à être relié à l'élément de base (22) et recouvrant largement le logement (30) de bras d'essuie-glace, et l'élément de recouvrement (20) présentant une surface (28) de déflecteur de vent qui est prévue pour repousser un air affluant et à presser le balai d'essuie-glace (16) contre une vitre du véhicule, et l'élément de base (22) étant conçu pour recevoir un balai d'essuie-glace (16), la surface (28) de déflecteur de vent formant un angle principal compris entre 25° et 75°, de préférence entre 40° et 60°, avec l'axe de palier (32), **caractérisé en ce que** l'unité d'adaptation (12), en particulier l'élément de recouvrement (20) et/ou l'élément de base (22), présente une ouverture de bras d'essuie-glace qui forme un angle de bras d'essuie-glace compris entre -15° et 15°, de préférence entre -5° et 5°, avec la surface (28) de déflecteur de vent.

2. Unité d'adaptation selon la revendication 1, **caractérisée en ce que** la surface de déflecteur de vent est réalisée de manière concave au moins par zones dans la direction de l'axe de palier.

3. Unité d'adaptation selon l'une des revendications précédentes, **caractérisée en ce que** la surface de déflecteur de vent est réalisée de manière convexe au moins par zones dans la direction de l'axe de palier.

4. Unité d'adaptation selon l'une des revendications précédentes, **caractérisée en ce que** l'élément de recouvrement et/ou l'élément de base présente un axe arrière (46) qui est situé sur un côté de l'élément de recouvrement opposé au vent et sur une face inférieure ou une face de l'élément de recouvrement opposée à la surface de déflecteur de vent, et est disposé en grande partie parallèlement à la direction d'un bras d'essuie-glace, et la surface de déflecteur de vent présente une distance verticale minimale par rapport à l'axe arrière comprise entre 0,8 cm et 2,0 cm, de préférence entre 1,0 cm et 1,5 cm, et la surface de déflecteur de vent présente une distance verticale maximale par rapport à l'axe arrière comprise entre 1,5 cm et 3,0 cm, de préférence entre 2,0 cm et 2,5 cm.

5. Unité d'adaptation selon l'une des revendications précédentes, **caractérisée en ce qu'**une tangente avant (60) en un point avant (40) de la surface de déflecteur de vent forme avec l'axe de palier un angle avant compris entre 30° et 70°, de préférence entre 45° et 55°, le point avant étant situé sur un bord (36) de la surface de déflecteur de vent orienté vers le vent et la tangente avant étant disposée dans un plan perpendiculaire à la direction du bras d'essuie-glace.

6. Unité d'adaptation selon l'une des revendications précédentes, **caractérisée en ce qu'**une tangente arrière (64) forme un angle avant compris entre 10° et 60°, de préférence entre 25° et 35°, avec l'axe du palier en un point arrière (44) de la surface de déflecteur, le point arrière se trouvant sur un bord (42) de la surface de déflecteur orienté à l'opposé du vent et la tangente arrière étant disposée dans un plan perpendiculaire à la direction du bras d'essuie-glace.

7. Unité d'adaptation selon l'une des revendications précédentes, **caractérisée en ce qu'**une tangente médiane (68) en un point médian (70) sur la surface de déflecteur de vent forme avec l'axe de palier un angle avant compris entre 25° et 65°, de préférence entre 40° et 50°, le point médian se trouvant au centre de la surface de déflecteur de vent entre le bord opposé au vent et le bord tourné vers le vent, et la tangente médiane étant disposée dans un plan perpendiculaire à la direction du bras d'essuie-glace.

8. Unité d'adaptation selon l'une des revendications précédentes, **caractérisée en ce que** l'unité d'adaptation présente une surface de guidage d'air (74) qui est disposée derrière le bord de la surface de déflecteur orienté vers le vent et qui forme avec l'axe de palier un angle de guidage d'air compris entre -25° et -65°, de préférence entre -40° et -50°.

9. Unité d'adaptation selon l'une des revendications précédentes, **caractérisée en ce que** la surface de déflecteur de vent dépasse, avec son bord opposé au vent, d'au moins 1 mm une surface de base (82) de l'unité d'adaptation dans une direction d'écoulement du vent, de préférence d'au moins 2 mm, de manière particulièrement préférée d'au moins 5 mm.

10. Unité d'adaptation selon l'une des revendications précédentes, **caractérisée en ce que** l'élément de recouvrement peut être relié de manière fixe à l'élément de base, de sorte que l'élément de recouvrement relié à l'élément de base est pratiquement immobile par rapport à l'élément de base.

11. Unité d'adaptation selon l'une des revendications précédentes, **caractérisée en ce que** l'élément de recouvrement est réalisé de manière à être apte à être poussé sur l'élément de base, en particulier le long de la direction du bras d'essuie-glace et/ou de manière à être apte à être poussé en grande partie le long de la direction du bras d'essuie-glace.

12. Unité d'adaptation selon l'une des revendications précédentes, **caractérisée en ce que** le logement de bras d'essuie-glace est conçu pour recevoir un bras d'essuie-glace avec un élément de liaison en forme de languette et/ou pour recevoir un bras d'essuie-glace avec un élément de liaison en forme de croissant et/ou pour recevoir un bras d'essuie-glace avec un élément de liaison qui présente au moins partiellement un segment ovale, en particulier un segment circulaire, le segment ovale se trouvant de préférence dans un plan avec un axe longitudinal du bras d'essuie-glace.

13. Unité d'adaptation selon la revendication 12, **caractérisée en ce que** le logement du bras d'essuie-glace présente un cylindre et/ou un segment de cylindre, le cylindre et/ou le segment de cylindre étant aménagé pour entrer en contact avec l'élément de liaison du bras d'essuie-glace et un axe de cylindre du cylindre et/ou du segment de cylindre étant orienté parallèlement ou largement parallèlement à l'axe de palier.

14. Unité d'adaptation composée d'un bras d'essuie-glace et d'une unité d'adaptation selon l'une des revendications précédentes, **caractérisée en ce que** le bras d'essuie-glace présente un élément de liaison en forme de languette et/ou présente un élément de liaison en forme de faucille et/ou présente un élément de liaison qui présente au moins partiellement un segment ovale, en particulier un segment circulaire, le segment ovale étant de préférence situé dans un plan avec l'axe longitudinal du bras d'essuie-glace.

15. Unité d'adaptation selon la revendication 14, **caractérisée en ce que** le bras d'essuie-glace est tordu autour de la direction du bras d'essuie-glace entre l'élément de liaison et une partie centrale du bras d'essuie-glace, de préférence est tordu selon un angle de torsion compris entre 20° et 50°, de préférence encore entre 30° et 40°.

16. Unité d'adaptation selon l'une des revendications 14 ou 15, **caractérisée en ce que** le bras d'essuie-glace présente un coude entre l'élément de liaison et la partie centrale et/ou **en ce que** l'élément de liaison et/ou une pièce d'extrémité du bras d'essuie-glace présente, perpendiculairement à la direction du bras d'essuie-glace, un décalage par rapport à la partie centrale, qui est compris entre 0,5 cm et 5,0 cm, de préférence entre 1,5 cm et 4,0 cm, de manière particulièrement préférée entre 2,5 cm et 3,0 cm.
